# EUROPEAN PATENT SPECIFICATION

(11) **EP 3 775 102 B1**
(45) Date of publication and mention of the grant of the patent: **16.03.2022**
(21) Application number: 18803466.4
(22) Date of filing: 21.09.2018
(51) Int. Cl.: C10B 31/00, C10B 53/02, C10B 47/44, C10L 9/08

(54) **METHOD AND APPARATUS FOR PROCESSING BIOMASS**
VERFAHREN UND VORRICHTUNG ZUR VERARBEITUNG VON BIOMASSE
PROCÉDÉ ET APPAREIL POUR LE TRAITEMENT DE BIOMASSE

(30) Priority: 29.03.2018 HU 1800109
(43) Date of publication of application: 17.02.2021
(73) Proprietor: Agricarbon Kft., 3555 Harsány (HU)
(72) Inventor: SZAMOSI, Zoltán, 3433 Nyékládháza (HU)
(74) Representative: Danubia Patent & Law Office LLC
(86) International application number: PCT/HU2018/050040
(87) International publication number: WO 2019/186216

(56) References cited:
- WO-A1-2011/119470
- WO-A1-2016/046580
- US-A1- 2012 117 815
- US-A1- 2016 348 211

## Description

The invention relates on the one hand to a method according tho the introducing part of claim 1 for processing biomass, and on the other hand to an apparatus according to the introducing part of claim 2 for the implementation of the proposed method.

WO 2016/046580 A1 discloses a method for treating biomass in a torrefaction process.

WO 2014164545 A1 discloses a method for biomass treatment where high-temperature biomass treatment results in obtaining a gaseous product. Utilising the latter faces barriers a several places; the document neither discloses nor provides potential recommendations for obtaining a solid product.

WO 2010124066 A2 also discloses a method where the end-product is a synthesis gas that is obtained through the high-temperature treatment of biomass.

In the method disclosed in WO 2014164751 A1, biomass is treated at substantially higher pressure than the atmospheric one to obtain as main product intermediate organic products and bio fuels.

WO 2007/078199 discloses a method to pyrolyse biomass, where biomass fed to the pyrolysis reactor is roasted with the help of gases by an apparatus divided into two parts, comprising an oil furnace coupled to two heat exchangers, one heat exchanger heating the drying medium, the other heat exchanger heating the biomass fed into the apparatus fed into the apparatus by a piston mechanism or its pyrolysis gas.

WO 2012126096 A1 discloses a system for the thermochemical treatment of organic compounds such as biomass comprising a raw material reservoir; a thermochemical reaction chamber comprising a heat source; at least one auger; a separation chamber, and a controller-feeder device. The controller-feeder device is coupled to the reaction chamber and/or the separation chamber. The system may be used for producing useful energy products such as bio-oil and gases. Agricultural-type biomass may require solid/liquid separation, that is, pretreatment, that can be done according to the document by centrifuge, filter or separation, followed by drying e.g. in a drier, screw press or rotating drum. In a possible embodiment, the treatment may be performed by decreasing the operating temperature of the thermochemical reaction chamber, at a temperature of around 200-320 °C. In order to attain the reduced oxygen conditions necessary for the pyrolytic reaction, the air is cleaned starting from the system by injecting inert gas such as nitrogen, and the system is kept under light vacuum by e.g. a suction pump.

WO 2016116588 A1 discloses a method and apparatus for processing heat-producing material and in particular for preserving organic materials such as biomass, in particular to improve the energy content of the material, the method involving enclosing the material in a reactor which is then evacuated by means of a fluid-driven vacuum pump to establish an oxygen free environment within the reactor and heating the material to above 200 °C. Process by-products such as volatile gases and/or oils and the liberated volatile gases and/or oils are extracted. During torrefaction, low-quality biomass materials such as wood, grass etc. are converted into a carbon-dioxide-containing material know under the name of charcoal or torrefied biomass. Such processing largely improves the properties of the raw material of combustion, transportation and storage. The process removes the heavy, low-energy portion of biomass in the form of gas/oil, but 30% of its original mass, and typically 80-98% of its original energy content remains. Gas/oil produced from the process is combustible; the resultant biochar is more economical to transport, and its energy per kilogram exceeds that of the usual biomass fuels. A drying step is implemented with precursor, and vacuum is created during the process to reduce energy required for drying the material to be processed.

In the method according to HU P1600229, the drying chamber and carbonising chamber areas are completely separated from combustion and smoke gases are annealed by heat derived from an externally powered combustion plant. A typical temperature of 200-300 °C is created in the drying chamber by the radiating heat of a heat baffle cone, flues and flue gas collector, and that is how the biomass material, typically of a shredded particle size of less than 50 mm and a moisture content of 20-45%, fed by the biomass feeder at a slow pace, intermittently, is heated. The amount of biomass introduced to the drying chamber at once is no more than what lets the temperature of the drying chamber be kept at 200-300 °C. 300 °C is the first temperature value where drying has been completed and a high percentage of volatile gases exits the biomass. Under the effect of heating, in the first phase, vapour and volatile, tar-forming gases are released from the biomass fed into the drying chamber. According to this solution, biomass is pre-treated, intermittently fed, and annealed at 200-300 °C. Gas generated during the process is cooled; synthesis gas is used in gas engines.

HU P0600921 A1 discloses a method for the energetic utilisation of formatted and unformatted energy crops according to which biomass is fed at the beginning of the process under the exclusion of air into an oxygen-deficient pyrolysing area where, under the effect of heat transfer, biomass is separated into combustible pyrolysis gas and solid combustion residues that can be used in a heat recovery energy or technological equipment. The essence of the method according to the invention is that biomass is exposed to direct heat transfer within the pyrolysis area, and pyrolysis started under the effect of heat transfer is then made self-sustaining by the regulated supply of air.

HU 230362 B1 discloses a method for the carbonisation of herbaceous and ligneous vegetable waste. In the process, herbaceous and ligneous vegetable waste is heated in a reactor, in an oxygen-free medium, by applying 0.01 mbar-0.5 bar vacuum, to 240-320 °C by indirect heat transfer, and kept at that temperature for a period of 4-40 minutes; the resulting gases are continually drawn off and the high-carbon end-product produced after the reactor is cooled is separated.

WO 2011009074 discloses a biofuel production method, catalyst and system. The method includes combining carbonaceous material with feedstock containing consumable catalyst to produce a feedstock/catalyst mixture. The feedstock/catalyst mixture is subjected to a vacuum pyrolytic gasification and liquefaction process to produce one or more bio fuels. The catalyst includes effective amounts of various catalyst constituents, which may include some or all of kaolin, zeolite, amorphous silica, alumina, aluminum phosphate and rare earth elements. The system may include apparatus for heating the feedstock/catalyst mixture under selected temperature and vacuum pressure conditions to produce a gaseous effluent comprising one or more hydrocarbon fractions, and additional distillation and condensation apparatus to produce one or more liquid and gaseous. The oil/lipid biomass products may be of plant or animal origin. The vacuum pump sub-system of the system maintains a vacuum level of around 15-25 Hgmm in the various subsystems of the biofuel producing system, this negative pressure provides for the desired reaction condition for producing the advantageous reactions through which feedstock is transformed into the desired fuels.

It is a common deficiency of the solutions embodying and representing state-of-the-art technology that they are unfavourable energetically: the amount of energy used for treatment is excessive compared to the energy content of the extractable product, so the use of the methods and the implementation of the equipment and systems applying the methods concerned are often uneconomical.

The objective of the present invention is to develop a method for biomass treatment that is exempt from the deficiencies of the known solutions.

The invention is driven by the recognition that, contrary to the known solutions, it is not necessary to apply inert gases and/or high pressure or even continuous vacuuming for carrying out torrefaction, i.e. to roast biomass, but by making the process quasi-self-sustaining after being launched, part of the energy used for treatment can also be regained and utilised for other purposes. This can be achieved by subjecting the batch of the chipped and dried feedstock to vacuum pressure in a separate charge unit that is arranged directly at the input of the space of treatment, i.e. roasting furnace and feeding the pre-vacuumed charge into the roasting furnace.

Combining the disclosure of WO 2012126096 A1 with that of WO 2016116588 A1 provides an apparatus where the biomass or animal droppings being introduced is annealed under vacuum. The combination results in a gas-tight apparatus, with reduced gas content being produced in its interior. The end product produced in such hypothetic apparatus can transform in vacuum, and would therefore provide a worse solution due to continuous vacuuming than the one we would like to achieve based on our objective; no person skilled in the art would choose such combination.

Combining the disclosure of WO 2012126096 A1 with that of the above-mentioned P1600229, pyrolytic synthesis gas and/or biochar could be produced that is heat-treated under vacuum, to be used as soil conditioner, but due to continuous vacuum being necessary for operating the apparatus, this combination would also result in an energetically less favourable solution than some economical known solution and would not promote the achievement of our objective.

Combining the disclosure of WO 2012126096 A1 with that of the above-mentioned P0600921 A1 would provide a method where an oxygen-deficient environment is provided initially with the help of vacuum, and the process is made self-sustainable after the start of pyrolysis by providing air and by intermittent feeding. The method would be suitable mostly for generating gases, so the solid-end product would not be utilisable. Since the end-product of this method is gaseous, the objective we want to achieve, the solid end-product, cannot be realised, and introducing air would have a negative effect on the method due to its oxygen content.

Combining the disclosure of WO 2012126096 A1 with that of the above-mentioned HU 230362 B1 could make feasible a method where pre-chopped feedstock would again be treated in vacuum. Although the combination would result in a solid end-product suitable or utilisation as fuel, this solution would produce an unfavourable outcome since maintaining the continuous vacuum would imply a significant energy demand due to the need for gas extraction.

Combining the disclosure of A WO 2012126096 A1 with that under the above-mentioned WO 2011009074 would result in a vacuum pyrolysis method where the quality of the end-product is improved by a catalyst. This combination, since a vacuum system is created, would also result in higher energy consumption that deteriorates the energy indices, and not even the catalysts constituting a basic element of this known solution could remedy that.

Combining the disclosure under WO 2016116588 A1 with that under the above-mentioned P1600229 would result in a method and an apparatus inside which thermochemical treatment could be executed in vacuum that would have the same drawback as the application of the solutions mentioned previously one by one or in combination: higher energy consumption.

By combining the disclosure under WO 2016116588 A1 with that under the above-mentioned P1600229, we could create and maintain self-sustaining pyrolysis, but we could not give up applying vacuum. Pyrolysis realised by continuous air input and the extraction of pyrolysis gas by a vacuum pump would lead to a theoretically and structurally dysfunctional construct.

The same drawback occurs if the disclosure under WO 2016116588 A1 is combined with that under the above-mentioned P0600921 A1: the heat treatment of the feedstock could be realised under vacuum, in an oxygen-deficient medium, to receive a solid end-product, but continuous vacuum would result in higher energy consumption also in this complex solution.

Combining the disclosure under WO 2016116588 A1 with that under 230362 B1 a thermochemical process could be realised in oxygen-deficient environment in the presence of catalyst, where the term "oxygen-deficient environment" might mean vacuuming or also inert gas, but a completely different end-product would be obtained because of the presence of the catalyst.

Combining the disclosure under P1600229 with that under P0600921 A1, self-sustaining pyrolysis, heat treatment at high temperature could be produced, but that would produce mainly gaseous end-products, thus our objective, the solid end-product, would not be realised in this case either, and introducing air would have a negative effect on the process due to its oxygen content.

By combining the disclosure under P1600229 with that under 230362 B1, we could produce a vacuum pyrolysis method where the end-product is mainly gaseous. Continuous vacuum would, however, result in higher energy consumption also under this solution.

By combining the disclosure under P1600229 with that under WO 2011009074, a catalytic pyrolysis process could be compiled, the end-product of which would be gaseous or liquid, so the objective set by us, the solid end-product, could not be realised in this case either.

By combining the disclosure under P0600921 A1 with that under 230362 B1, no industrially applicable method or apparatus could be created, since P0600921 A1 solves pyrolysis by supplying air, whereas in 230362 B1 heat treatment is done under vacuum. If the specified quantity of air is introduced into the interior the apparatus disclosed in the latter document, biomass fed in may ignite; if a smaller amount is introduced, we are back at the solution disclosed under P0600921 A1.

Combining the disclosure under P0600921 A1 with that under WO 2011009074 results in a catalytic pyrolysis process where pyrolysis can be made self-sustainable by supplying air. The end-product of the method is again gaseous, so the objective we want to achieve, the solid end-product, cannot be attained in this case either and, moreover, an end-product of a completely different quality is obtained in the presence of the catalyst.

Combining the disclosure under HU 230362 B1 with that under WO 2011009074 results in a catalytic pyrolysis process under vacuum, the end-product of which may be gaseous, but also solid. Continuous vacuum, however, results in higher energy consumption also in such a process and, moreover, an end-product of a completely different quality is obtained due to the presence of the catalyst.

Although the present invention deploys many of the essential properties of the known solutions, none of the methods and apparatuses known to me outlined above is suitable to automatically ensure the objective of the present invention, not even through the combination or assembly of the described or proposed parameters or units, respectively, by a person skilled in the art.

The task being set has been solved on the one hand by a method for processing biomass according to the features of claim 1 and on the other hand by an apparatus for the implementation of the method according to the invention, according to the features of claim 2. A preferred embodiment is disclosed in the dependent claim.

It is to be considered an advantage and essential feature of the method according to the invention that it can ensure more flexible and energy-saving operation by a few measures that could even be considered insignificant, that are not present in the methods and apparatuses representing state-of-the-art technology either specifically or at the level of recommendations: the air-tight locking, vacuuming of the batch portions during preparation, maintenance of the applied minimum absolute overpressure during pyrolysis can collectively provide for the advantages being described below, but applying these measures cannot be considered a trivial, routine action for persons skilled in the art, not even based on their professional knowledge and studies of state-of-the-art technology; to invent them, we had to go beyond combining the known solutions that cover the area concerned mosaic-like.

Features and advantages of the disclosure will be apparent from the detailed description which follows, taken in conjunction with the accompanying drawings, which together illustrate, by way of example, features of the disclosure; and, wherein:

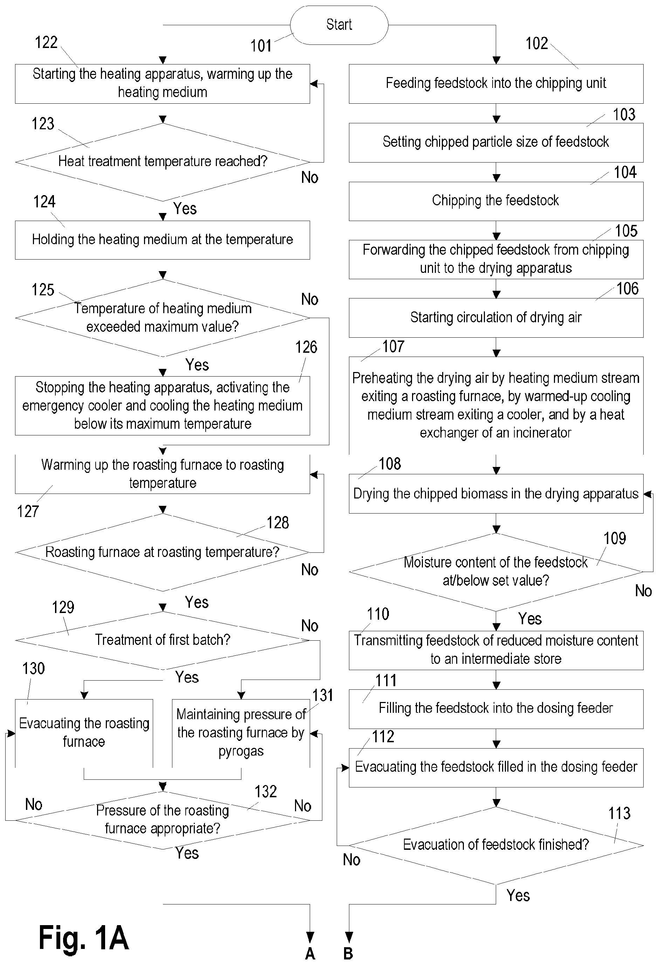

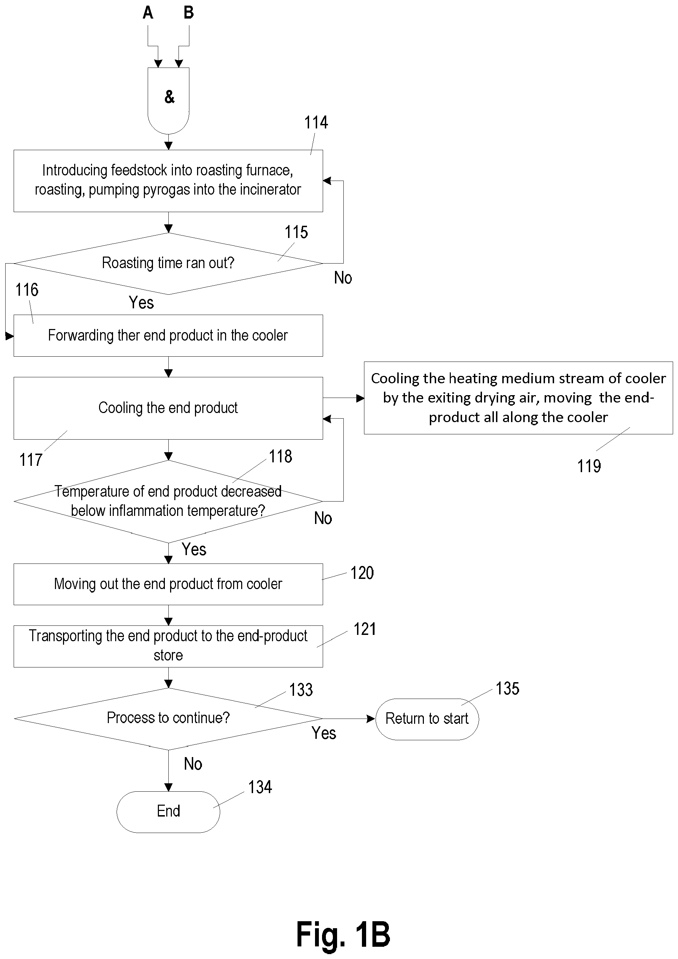

- Figures 1A, 1B: illustrate a flowchart of a possible realization of the method according to the invention, and

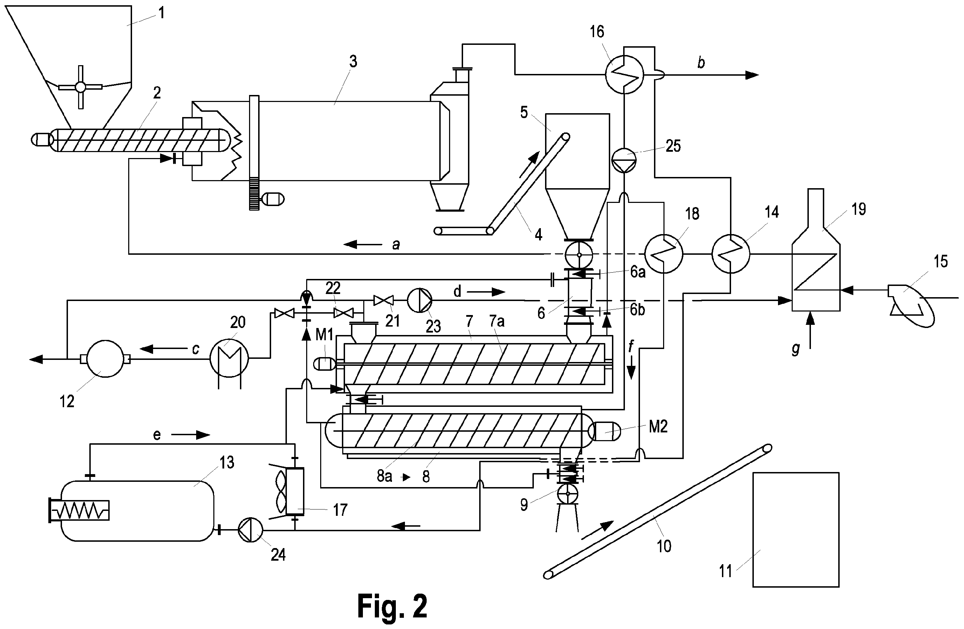

- Figure 2: shows the flow diagram of the structure and operation of an apparatus suitable for the implementation of the method according to the invention.

Applying the method according to the invention makes it possible to convert low-energy-density biomass - for example herbaceous and woody plants - into solid fuel of higher calorific value and energy density, and to recover the energy of the resulting pyrogases. The end-product of the method is carbonised, so-called roasted, solid biomass that has good combustion properties: high calorific value, dryness, adequate volatile gas content and hydrophobic nature. The further energetic utilisation of pyrogas generated by the method is feasible by using one extra equipment during the process, and the total production energy demand may be significantly lower than in methods associated with state-of-the-art technology.

The exemplary method is launched in step 101. In step 102 feedstock, i.e. biomass to be converted is fed - separated by type or mixed - into a chipping unit 1 where in step 104 the initial size of the biomass is reduced to ensure homogenous particle distribution. Particle size is preferably chosen at maximum 10 cm; if necessary, this is ensured in step 103. In step 105 the chipped biomass, that is, the feedstock is delivered in the present case with the help of gravitation from the chipping unit 1 to a charge device 2 that is a screw conveyor in the present case, but any transportation device suitable for the purpose might be used. The transportation capacity of charge device 2 should preferably be chosen at minimum 100 kg/h. Chipped biomass is forwarded by the charge device 2 to a drying apparatus 3. In the present case, the drying apparatus 3 is a tumble drier, but the proposed method may also be realised by other suitable drying equipment. In case of a tumble drier, the time to be spent in it by the feedstock fed into it is influenced by the position of the drum and its rotation speed. Circulation of drying air is started in step 106. In step 108, chipped biomass is dried in the drying apparatus 3 at a minimum drying temperature of 105 °C until the feedstock finally loses a significant part of its moisture content and its moisture content drops below 12%, to be checked in step 109. The lower the moisture content of the feedstock exiting drying apparatus 3, the less tart-formation is to be expected; this has a favourable effect on further roasting. Feedstock moisture content is monitored by devices known and applied in this special field; no special or new measuring device or method is necessary.

In case of established or essentially established process conditions, drying air is preheated in step 107 by a heating medium stream **e** exiting a roasting furnace 7, and/or by a warmed-up cooling medium stream **f** exiting a cooler 8, and/or by the a heat exchanger of an incinerator 19, to further improve the efficiency of the process.

In step 110, the feedstock of reduced moisture content is delivered from the drying apparatus 3 by another feeder 4 to an intermediate store 5 facilitating the continuous, uninterrupted application of the method. In present example, a common chain conveyor is used as feeder 4, but forwarding may be solved also in other known ways. Adequate intermediary storage necessary for continuous operation is ensured by choosing the capacity of intermediate store 5 so as to ensure operation for at least one hour - to be suitable for storing at least 100 kg biomass.

Feedstock with reduced moisture content is transmitted gravitationally in step 111 from the intermediate store 5 through a vacuum-batching unit 6 to the roasting furnace 7 for heat treatment where it is kept roasted at a temperature in the range of 220-320 °C.

Charging of the feedstock is performed by the aid of the vacuum-batching unit 6. After filled with feedstock, the interior of the vacuum-batching unit 6 is separated from the intermediate store 5 in a gas-tight manner, and in step 112 air is exhausted by vacuum pumping out of vacuum-batching unit 6, and in step 114 the vacuumed feedstock is forwarded into the roasting furnace 7. The rate of vacuuming the interior of the vacuum-batching unit 6 is checked in step 113, and it is continued or terminated depending on the result. If the capacity of the vacuum-batching unit 6 is smaller than the capacity of the interior of roasting furnace 7, feedstock can be supplied to roasting furnace 7 in several steps; in this case vacuuming the vacuum-batching unit 6 and the feedstock in it shall be executed in each step.

The temperature of the roasting furnace 7 is set in function of the desired calorific value of the end-product; for higher calorific value or a lower end-product weight, temperature is set at around 300 °C, for lower calorific value and higher end-product weight, a temperature of around 220 °C is set. During heat treatment, the chemical structure of the biomass changes and its calorific value increases. The final weight of the end-product is determined by time spent by the feedstock in the roasting furnace 7: the longer the feedstock is kept in the roasting furnace 7, the more biomass-constituting materials become gaseous, that is, the smaller the final weight of the solid end-product. Taking this into account, feedstock is kept and treated in the roasting furnace 7 for a period from 30 seconds to 30 minutes; the time span is checked in step 115.

After roasting the end-product is forwarded in step 116 to the cooler 8, where the end-product is cooled below its ignition point ever, but by all means below 200 °C temperature, to prevent the ignition of the end-product. The temperature of the end-product, its change, is measured intermittently in the present case in step 118. In step 119, the heating medium stream **f** of cooler 8 is cooled by the exiting drying air, and the end-product is moved all along the cooler 8.

Depending on the expected quality of the end-product, heat treatment is conducted in the roasting furnace 7 so that, at the start of the process, starting pressure prevailing in the inner space of the roasting furnace 7 is reduced to a value between 0.5 bar(a) - 0.01 mbar(a), to keep the temperature in the interior of the roasting furnace 7 below the ignition concentration (limiting oxygen concentration) of the first biomass portion fed into it. The first biomass portion is introduced into this depressive inner space, heated so as to attain the indicated temperature in a manner to be presented later, by the vacuum-batching unit 6, that is, similarly to the traditional heat treatment technologies, it is first heated to the planned nominal temperature then, during the remaining temperature holding time, its chemical structure transforms, part of its volume appears as pyrolysis gas, its calorific value increases.

During heat treatment by roasting, we let pressure caused by pyrogas generated in the inside area of roasting furnace 7 increase to 1.0 bar, and keep the pressure during heat treatment at a value exceeding 1.0 bar by 10-200 mbar at the highest. This has the effect that the extra quantity of gas generated during roasting exits roasting furnace 7 "on its own", creating an energetically more favourable situation than the processes presented as state-of-the-art technology since, in function of the size of the equipment, at maximum only a low-power fluid machine (e.g. blower) is required for transmitting the gases exiting the furnace.

Biomass movement in the roasting furnace 7 and end-product movement in the cooler 8 can be ensured in the appropriate, known, manner; in the example presented here, auger actuation assemblies 7a, 8a of a design and operation known to those skilled in the art are used, driven by motors M1, M2, respectively.

In step 120, the end-product is transmitted from cooler 8 - in the present case also gravitationally - to another charging unit 9, and then in step 121 it is forwarded from there by a conveyor belt transporter device 10 to an end-product store 11.

Essentially, a heating apparatus 13 is switched on at the start of the process, in step 122, to produce heating medium stream e of the necessary amount and temperature. The temperature of the heating apparatus 13 and of heating medium stream e is measured in step 123; after reaching the appropriate temperature, it is maintained in step 124. If it is established in step 125 that temperature exceeds the predefined maximum value, the heating apparatus 13 is stopped in step 126 and an emergency cooler 17 designed for this purpose is activated, and the heating medium stream e is cooled to below the maximum limit. In step 127, the heating medium stream e of appropriate temperature is applied to increase the temperature of the roasting furnace 7; its actual temperature is checked in step 128. After reaching the appropriate temperature of the roasting furnace 7, it is examined in step 129 whether the next step applies to a first "portion" or, depending on the sizes, the n^{th} chipped, dried, vacuumed "portion" is going to be roasted. If it is a first portion, the roasting furnace 7 is vacuumed in step 130, if not, minimum excess pressure is maintained in the roasting furnace 7 in step 131; its appropriateness is measured and established in step 132. Similarly, it is decided in step 133 whether the process will be continued with the portions determined by the size of the individual treatment units, or it will be terminated in step 134. If further one or several portions are to be roasted, we return to the start of the process by step 135; repeat the steps described above without, of course, heating up the heating apparatus 13 and deciding regarding the first portion.

The unusual novelty of the method is that biomass fed into the roasting furnace 7 is heat-treated in its own pyrolysis gas; neither vacuum nor inert gases are applied during roasting. The first biomass portion is still fed into the evacuated or vacuumed interior of the roasting furnace 7, but once roasting has started, pyrolysis gas is being generated and the next biomass portion already arrives into the pyrogas being generated.

In the presented embodiment, the feedstock is dried in the drying apparatus 3 by the air stream **a** fed from the environment by an air blower 15 and pre-heated through the heat exchanger of the incinerator 19 utilising pyrogas, the heat exchanger 14 of the air stream discharged from the cooler 8 and the heat exchanger 18 of heating medium stream **e,** utilising the energy of all the waste heat generated in the proposed method at as many as three places.

Air stream **b** discharged from the drying apparatus 3, of a temperature of around 100 °C, is led outside through a heat exchanger 16, cooling thereby the air stream **h** applied to cool the end-product fed into the cooler 8, that effectively contributes to the cooling of the end-product of a temperature of 220-300 °C.

Pyrolysis gas stream **d** discharged from the roasting furnace 7 is led through a closing valve 21 to the incinerator 19 and utilised by e.g. burning.

Evacuation in the roasting furnace 7 as indicated above is executed by pumping out air stream **c** by a vacuum pump 12 preferably at the same stud of the roasting furnace 7, through an appropriate closing valve 22 and material separator cooler-filter means 20.

Heating the roasting furnace 7 to the necessary, chosen, temperature and holding it there is ensured by the heating medium stream **e** heated by the heating apparatus 13 and circulated in the present example by a blower 24.

### Example 1

Mixed wood and drift is used as feedstock. After chipping and drying, it is treated in the roasting furnace 7 at p=1.1 bar(a) pressure and T=300 °C temperature. At 30 minutes holding time, from feedstock of 1t mass and 40% initial moisture content, an end-product of 560 kg and 4% moisture content, of 22 MJ/kg calorific value, is produced.

### Example 2

Wheat straw is used as feedstock. After chipping and drying, it is treated in roasting furnace 7 at p=1.05 bar(a) pressure and T=240 °C temperature. At 0.5 minute holding time, from feedstock of 1t mass and 16% initial moisture content, an end-product of 780 kg and 6% moisture content, of 18 MJ/kg calorific value, is produced.

A preferred embodiment of the apparatus realising the method according to the invention is installed in lightweight housing, more precisely a transportable container of sufficient size.

The apparatus is arranged in the container with the chipping unit 1 fixed at the top region of the container with a charge device 2 coupled to it; the charge device 2 has a wide charging hopper at its upper end that promotes feeding the chipped biomass into the drying apparatus 3. The biomass travels gravitationally downwards into the feeder 4 located under the drying apparatus 3, and moisture removed from the feedstock is exiting through upper opening of the drying apparatus 3. The outlet of the feeder 4 is coupled to an upper inlet of the intermediate store 5, and the outlet of the latter is coupled to, in the present example rotating-cell-type, vacuum-batching unit 6 arranged under it. A remote-controlled quick-lock gas-tight closing valve 6a is installed at the inlet of the vacuum-batching unit 6 and at its outlet a further quick-lock closing valve 6b is installed. The upper inlet closing valve 6a, for example a gate valve, is gas tight and operates at lower temperatures; the lower outlet closing valve 6b withstands higher operating temperatures is and it is not necessarily a fully gas-tight closing valve. The interior of the vacuum-batching unit 6 may be locked by the closing valves 6a, 6b, to make evacuation and/or vacuuming described in connection with the method feasible. Closing valves 6a, 6b can be operated manually or even controlled or remote-controlled according to the pyrolysis stages; several solutions are available for this purpose to those skilled in the art. Based on the considerations described above, the charging unit 9 coupled to the cooler 8 is similarly designed.

The dried feedstock input is heated to 220-300 °C by the heating medium stream **e,** in the present case thermo-oil, circulating in the jacket of the roasting furnace 7; the more precise temperature depends on the desired calorific value of the end-product. If a higher calorific value is to be attained, then a temperature close to 300 °C is to be set and provided for; if a lower calorific value is desired, a temperature close to 220 °C is preferably applied.

In the presented example, the roasting furnace 7 is an apparatus with three studs, designed and manufactured to withstand high temperatures, with a rotating charging structure arranged in its interior area. Two studs are designed to charge the feedstock and discharge the end-product, the third stud is meant to discharge the gaseous media. Rotatable feeder 7a is a screw conveyor, preferably of adjustable speed, driven by the motor M1 installed outside the roasting furnace 7. Dwelling time of the feedstock in the rotating roasting furnace 7 is defined by the speed ever of rotary screw closing valve 21. The dwelling time determines the final weight of the end-product: the longer the time spent by the feedstock in the roasting furnace 7, the more materials constituting the biomass become gaseous that is, the smaller the final weight of the solid end-product.

The interior area of the roasting furnace 7 is coupled to the vacuum pump 12 through the third stud, via a closing valve and separating filter 20, remote-controlled in the present case, and in a further specific case to the incinerator 19 through the remote-controlled closing valve 21 and a blower 23 to discharge the pyrolysis gas being generated.

The roasting furnace 7 acquires its inert atmosphere under the effect of the vacuum pump 12. Initial pressure in the roasting furnace 7 should be chosen below the ignition concentration (limiting oxygen concentration) that is usually smaller than the pressure value of 0.5 bar(a).

Heating apparatus 13 providing for the heating and treatment temperature of the roasting furnace 7 produces the appropriate temperature of the heating medium stream **e.** In the present case, the heating apparatus 13 is an electrically heated thermo-oil furnace coupled to the roasting furnace 7 counter-current-wise; moreover, the drying air preheats the air stream **a** in the heat exchanger 18 with the remaining thermal energy of the thermo oil exiting the first. The equipment is preferably supplemented with an emergency cooler 17 meant to totally cool down the equipment in case of any malfunction.

In the counter-current cooler 8 arranged under the roasting furnace 7, a feeder 8a similar to that designed in the roasting furnace 7, driven from the outside by the motor M2, is installed to ensure the progress of the end-product fed into the interior of the cooler 8. This feeder 8a preferably also has controllable or adjustable speed, to be able to set various dwelling times that influence the rate of drying.

The heat energy of the warmed-up cooling medium stream discharged from cooler 8 is utilised in the coupled air-pre-heater heat exchanger 14 where it pre-heats somewhat the drying air while cooling down, improving thereby the energy balance of the total system.

When using the apparatus, first air or gaseous media that got stuck in roasting furnace 7 are removed by the vacuum pump 12 and pressure is reduced to the already mentioned level. Heating medium stream e is heated by the heating apparatus 13 to the indicated temperature of 220-300 °C. After reaching that, feeding feedstock into the chipping unit 1 is started. Dry air blower 15 is started to supply drying air of appropriate temperature into the drying apparatus 3. Cooling pump 25 or the cooling blower of the heat exchanger 16 streaming the cooling medium stream **f** is started.

Chipped feedstock loses part of its weight in the roasting furnace 7 in function of the temperature and the dwelling time there. Weight loss is concurrent with gas formation, so-called pyrolysis gas generation. Similarly to wood gas, this pyrogas consists mainly of hydrocarbons, hydrogen, carbon monoxide and carbon dioxide; it is a gas mixture of lower calorific value that is nevertheless combustible. Its thermal utilisation is recommended for example in the incinerator 19 to preheat also air used for drying, but the released energy may also be used to preheat heating medium stream **e.** Thermal recovery and utilisation of the gas mixture improves the overall energy balance by 5%.

The method according to the invention has several advantages that are unusual compared to the known solutions:
- Whereas state-of-the-art methods require a high-performance and continuous-operation vacuum pump to maintain high vacuum in the roasting furnace, the method according to the invention requires the operation only of a flow technology machine necessary for pressure increase by a few mbar(a) caused by the resultant pyrogases, having an energy demand corresponding to around one tenth of the known large-size vacuum pumps. This pump delivers pyrogas to the place of energetic utilisation represented in the figure by incinerator 19.
- Heat treatment in own pyrolysis gas provides for an oxygen-free environment in itself, since the resultant gases contain hydrocarbons, so no special gas cleaner and high-performance vacuum pump is needed.
- The energy indicators of the process improve considerably. The energy demand necessary for the own consumption of the process is significantly lower than in the known solutions: at least 15-20% efficiency increase can be attained by heat treatment performed in noncontinuous vacuum.

### List of reference signs

- 1 -: chipping unit
- 2 -: charge device
- 3 -: drying apparatus
- 4 -: feeder
- 5 -: intermediate store
- 6 -: vacuum-batching unit
- 6a -: closing valve
- 6b -: closing valve
- 7 -: roasting furnace
- M1 -: motor
- 7a -: feeder
- 8 -: cooler
- M2 -: motor
- 8a -: feeder
- 9 -: charging unit
- 10 -: transporter
- 11 -: end-product store
- 12 -: vacuum pump
- 13 -: heating apparatus
- 14 -: heat exchanger
- 15 -: air blower
- 16 -: heat exchanger
- 17 -: emergency cooler
- 18 -: heat exchanger
- 19 -: incinerator
- 20 -: filter means
- 21 -: closing valve
- 22 -: closing valve
- 23 -: blower
- 24 -: blower
- 25 -: cooling pump
- **a** -: air stream
- **b** -: air stream
- **c -**: air stream
- **d** -: pyrolysis gas stream
- **e** -: heating medium stream
- **f** -: cooling medium stream
- **g -**: material stream
- **h** -: air stream
- 101-135 -: steps

## Claims

1. Method for processing biomass, comprising the steps of
for ensuring homogenous particle distribution of biomass feedstock chipping the initial size of the biomass feedstock to a particle size of maximum 10 cm,
measuring the moisture content of the biomass feedstock chipped to processing size and reducing the measured moisture content of the biomass feedstock by drying so as to fall below 12%,
preheating a drying air stream **(a)** used for drying the feedstock, before feeding a first portion of dried feedstock into a heat treatment roasting furnace (7),
evacuating the interior of the roasting furnace (7),
heating the interior of the roasting furnace (7) to a temperature in the range of 220-300 °C, predetermined in function of a target calorific value of an end-product,
feeding dried feedstock into the roasting furnace (7),
for producing an end-product, roasting the feedstock fed into the roasting furnace (7) by continuously maintaining a pressure exceeding 1.0 bar(a) by maximum 200 mbar(a) in the roasting furnace (7),
disposing of gaseous media released during roasting,
where disposing of the gaseous media released during roasting includes the utilisation of the gaseous media by burning,
transmitting the end-product from the roasting furnace (7) to a cooler, cooling the end-product to below its ignition temperature,
discharging the cooled end-product from the cooler for further utilisation,
pre-cooling a cooling medium stream **(f)** used for cooling the end-product by the drying air stream **(a)** used for reducing the moisture content of the feedstock,
***characterised in that***
feeding dried feedstock into the roasting furnace (7) comprises feeding the dried feedstock in portions into the roasting furnace (7) via a vacuum-batching unit (6), providing periodically closure of an interior of the vacuum-batching unit (6) by closing an outlet of the interior of the vacuum-batching unit (6) by a controllable closing valve (6a) and by closing an inlet of the interior of the vacuum-batching unit (6) in a gas-tight manner by a controllable gas-tight closing valve (6a), vacuum-pumping each feedstock portion led into the closed charging area of the vacuum-batching unit (6),
the step of preheating the drying air stream **(a)** used for drying the feedstock comprises at least one of preheating by a heating medium stream **(e)** discharged from the roasting furnace (7), preheating by warmed-up cooling medium stream **(f)** used for cooling the end-product, preheating by heat energy developing while burning the gaseous media generated during roasting.

2. Apparatus for the implementation of the method according to any of claim 1, comprising a charge device (2) for feeding feedstock from a chipping unit (1) to a drying apparatus (3) changing the moisture content of the chipped feedstock,
one or several transport means delivering dried feedstock into a roasting furnace (7) where heat treatment takes place,
a roasting furnace (7) roasting the feedstock fed into it by heat treatment, that is connected by a medium connection to at least one of pressure decreasing and pressure increasing means influencing pressure in the interior of the roasting furnace (7), and coupled to a heating apparatus (13) influencing temperature in the interior of the roasting furnace (7),
a cooler (8) receiving roasted end-product from the roasting furnace (13),
transport means delivering the cooled end-product for further utilisation to an end-product store (11), and
the roasting furnace (7) is associated with closing valves (21, 22) maintaining continuously a pressure exceeding 1.0 bar(a) by maximum 200 mbar(a) in the interior of the roasting furnace (7),
***characterised in that***
at least one of a heat exchanger (14) of the warmed-up cooling medium stream **(f),** a heat exchanger (18) of heating medium stream **(e)** of the roasting furnace (7) and a heat exchanger of an incinerator (19) disposing of the gaseous medium developing during pyrolysis is associated with a medium conduit delivering air stream drying the feedstock to the drying apparatus (3); the transport means includes an intermediate store (5) and vacuum-batching unit (6) providing for continuous operation of the transport means delivering dried feedstock into the roasting furnace (7) for heat treatment, the vacuum-batching unit (6) has controllable closing valves (6a, 6b) for air-tight closure of the interior of the vacuum-batching unit (6) towards the intermediate store (5) and for closure of the interior of the vacuum-batching unit (6) towards the subsequent roasting furnace (7) at temperatures used in the roasting furnace (7), said closing valves (6a, 6b) provide periodically air-tight closure of an interior of the vacuum-batching unit (6) connected to a vacuum pump via a medium conduit.

3. Apparatus according to claim 2, **characterised in that** a chipping unit (1) cutting the biomass feedstock to be treated to processing size is inserted before the drying apparatus (3).

## Patentansprüche

1. Verfahren zur Verarbeitung von Biomasse, umfassend die Schritte:
zur Gewährleistung einer homogenen Partikelverteilung des Biomasse-Rohstoffes Reduzierung der Ausgangsgröße des Biomasse-Rohstoffes auf eine Partikelgröße von maximal 10 cm,
Messen des Feuchtigkeitsgehalts des auf Verarbeitungsgröße gehackten Biomasse-Rohmaterials und Reduzieren des gemessenen Feuchtigkeitsgehalts des Biomasse-Rohmaterials durch Trocknen auf unter 12%,
während des Trocknens Vorwärmen eines Trocknungsluftstroms (a), der zum Trocknen des Einsatzmaterials verwendet wird,
Evakuieren des Inneren des Röstofens (7), bevor eine erste Portion getrockneten Einsatzmaterials in einen Wärmebehandlungsröstofen (7) eingespeist wird,
Erhitzen des Innenraums des Röstofens (7) auf eine Temperatur im Bereich von 220-300 °C, die in Abhängigkeit von einem Zielheizwert eines Endprodukts vorgegeben wird,
Zuführen von getrocknetem Ausgangsmaterial in den Röstofen (7),
zur Herstellung eines Endprodukts Rösten des dem Röstofen (7) zugeführten Einsatzmaterials durch kontinuierliches Aufrechterhalten eines Drucks von über 1,0 bar(a) bis maximal 200 mbar(a) im Röstofen (7),
Entsorgen der beim Rösten freigesetzten gasförmigen Medien,
wobei die Entsorgung der beim Rösten freigesetzten gasförmigen Medien die Verwertung der gasförmigen Medien durch Verbrennen umfasst,
Überführen des Endprodukts vom Röstofen (7) an einen Kühler,
Abkühlen des Endprodukts unter seine Zündtemperatur,
Ausschleusen des abgekühlten Endprodukts aus dem Kühler zur weiteren Verwendung,
Vorkühlen eines Kühlmediumstroms (f), der zum Kühlen des Endprodukts verwendet wird, durch den Trocknungsluftstrom (a), der zum Reduzieren des Feuchtigkeitsgehalts des Einsatzmaterials verwendet wird,
das Zuführen von getrocknetem Einsatzmaterial in den Röstofen (7) das portionsweise Zuführen des getrockneten Einsatzmaterials in den Röstofen (7) mittels einer Vakuum-Batch-Einheit (6) umfasst, was ein periodisches Schließen eines Inneren der Vakuum-Batch-Einheit (6 ) durchführt durch Verschließen eines Auslasses des Innenraums der Vakuumansatzeinheit (6) durch ein steuerbares Verschlussventil (6a) und durch gasdichtes Verschließen eines Einlasses des Innenraums der Vakuumansatzeinheit (6) durch a steuerbares gasdichtes Schließventil (6a), das jede in den geschlossenen Beschickungsbereich der Vakuum-Beschickungseinheit (6) geführte Beschickungsportion unter Vakuum pumpt,
der Schritt des Vorwärmens des Trocknungsluftstroms (a), der zum Trocknen des Einsatzmaterials verwendet wird, umfasst mindestens eines von Vorwärmen durch einen aus dem Röstofen (7) ausgetragenen Heizmediumstrom (e), Vorwärmen durch aufgewärmten Kühlmediumstrom (f) zum Kühlen des Endprodukts, Vorwärmen durch Wärmeenergie, die beim Verbrennen der beim Rösten entstehenden gasförmigen Medien entsteht.

2. Vorrichtung zur Durchführung des Verfahrens nach Anspruch 1, umfassend eine Beschickungsvorrichtung (2) zum Zuführen von Ausgangsmaterial von einer Hackeinheit (1) zu einer Trocknungsvorrichtung (3) zum Ändern des Feuchtigkeitsgehalts des gehäckselten Ausgangsmaterials,
ein oder mehrere Transportmittel, die getrocknetes Ausgangsmaterial in einen Röstofen (7) liefern, in dem eine Wärmebehandlung stattfindet,
einen Röstofen (7), der den ihm zugeführten Einsatzstoff durch Wärmebehandlung röstet, der über eine Medienverbindung mit Druckminderungs- und Druckerhöhungsmitteln verbunden ist, die den Druck im Inneren des Röstofens (7) beeinflussen, und mit einer die Temperatur im Inneren des Röstofens (7) beeinflussenden Heizvorrichtung (13) gekoppelt ist,
einen Kühler (8), der geröstetes Endprodukt aus dem Röstofen (13) aufnimmt,
Transportmittel, die das gekühlte Endprodukt zur weiteren Verwendung an ein Endproduktlager (11) liefern, und
dem Röstofen (7) Schließventile (21, 22) zugeordnet sind, die im Inneren des Röstofens (7) kontinuierlich einen 1,0 bar(a) um maximal 200 mbar(a) überschreitenden Druck aufrechterhalten, zumindest ein von einem Wärmetauscher (14) des aufgewärmten Kühlmediumstroms (f), einem Wärmetauscher (18) des Heizmediumstroms (e) des Röstofens (7) und einem Wärmetauscher von an eine Verbrennungsanlage (19), die das während der Pyrolyse entstehende gasförmige Medium entsorgt, mit einer Mediumleitung verbunden ist, die einen Luftstrom zum Trocknen des Einsatzmaterials an die Trocknungsvorrichtung (3) liefert;
die Transporteinrichtung einen Zwischenspeicher (5) und eine Vakuum-Batch-Einheit (6) umfasst, die für einen kontinuierlichen Betrieb der Transporteinrichtung sorgt, die getrocknete Beschickung in den Röstofen (7) zur Wärmebehandlung liefert, die Vakuum-Batch-Einheit (6) hat steuerbare Verschlussventile (6a, 6b) zum luftdichten Verschluss des Innenraums der Vakuum-Batch-Einheit (6) zum Zwischenspeicher (5) und zum Verschluss des Innenraums der Vakuum-Batch-Einheit (6) zur nachfolgenden Röstofen (7) bei Temperaturen, die im Röstofen (7) verwendet werden, wobei die Verschlussventile (6a, 6b) periodisch einen luftdichten Verschluss eines Innenraums der Vakuum-Batch-Einheit (6) gewährleisten, die über eine Mediumleitung mit einer Vakuumpumpe verbunden ist.

3. Vorrichtung nach Anspruch 2, **dadurch gekennzeichnet, dass** der Trocknungsvorrichtung (3) eine Hackeinheit (1) vorgeschaltet ist, die den zu behandelnden Biomasse-Rohstoff auf Verarbeitungsgröße zerkleinert.

## Revendications

1. Procédé de traitement de la biomasse, comprenant les étapes de
pour assurer une répartition homogène des particules de la matière première de biomasse en réduisant la taille initiale de la matière première de biomasse à une taille de particules de 10 cm maximum,
mesurer la teneur en humidité de la matière première de biomasse déchiquetée à la taille de traitement et réduire la teneur en humidité mesurée de la matière première de biomasse par séchage de manière à tomber en dessous de 12 %,
pendant le séchage, préchauffer un flux d'air de séchage (a) utilisé pour sécher la matière première,
avant d'introduire une première portion de la matière première séchée dans un four de grillage de traitement thermique (7), évacuer l'intérieur du four de grillage (7),
chauffer l'intérieur du four de grillage (7) à une température dans la plage de 220 à 300 °C, prédéterminée en fonction d'une valeur calorifique cible d'un produit final,
alimentation en matière première séchée dans le four de grillage (7),
pour produire un produit final, griller la matière première introduite dans le four de grillage (7) en maintenant en permanence une pression supérieure à 1,0 bar(a) de 200 mbar(a) au maximum dans le four de grillage (7),
l'élimination des milieux gazeux libérés lors de la torréfaction,
où l'élimination du milieu gazeux libéré pendant le grillage comprend l'utilisation du milieu gazeux par combustion,
transmettre le produit final du four de grillage (7) à un refroidisseur,
refroidir le produit final en dessous de sa température d'inflammation,
décharger le produit final refroidi du refroidisseur pour une utilisation ultérieure,
pré refroidir un courant de milieu de refroidissement (f) utilisé pour refroidir le produit final par le courant d'air de séchage (a) utilisé pour réduire la teneur en humidité de la charge d'alimentation,
***caractérisé en ce que***
l'alimentation de la charge d'alimentation séchée dans le four de grillage (7) comprend l'alimentation de la charge d'alimentation séchée en portions dans le four de grillage (7) via une unité de dosage sous vide (6), assurant la fermeture périodique d'un intérieur de l'unité de dosage sous vide (6 ) en fermant une sortie de l'intérieur de l'unité de dosage sous vide (6) par une vanne de fermeture commandable (6a) et en fermant une entrée de l'intérieur de l'unité de dosage sous vide (6) de manière étanche aux gaz par un vanne de fermeture étanche aux gaz contrôlable (6a), pompage à vide de chaque portion de matière première dans la zone de chargement fermée de l'unité de dosage sous vide (6),
l'étape de préchauffage du flux d'air de séchage (a) utilisé pour sécher la matière première comprend au moins l'un parmi un préchauffage par un flux de milieu chauffant (e) évacué du four de grillage (7), un préchauffage par un flux de milieu de refroidissement réchauffé (f) utilisé pour le refroidissement du produit final, un préchauffage par l'énergie thermique se développant tout en brûlant les milieux gazeux générés lors de la torréfaction.

2. Appareil pour la mise en oeuvre du procédé selon la revendication 1, comprenant un dispositif de charge (2) pour amener la matière première d'une unité de broyage (1) à un appareil de séchage (3) pour modifier la teneur en humidité de la matière première broyée,
un ou plusieurs moyens de transport délivrant la charge séchée dans un four de grillage (7) où a lieu un traitement thermique,
un four de grillage (7) grillant la matière première introduite dans celui-ci par traitement thermique, qui est relié par une connexion de milieu à au moins l'un des moyens de diminution de pression et d'augmentation de pression influençant la pression à l'intérieur du four de grillage (7), et couplé à un appareil de chauffage (13) influençant la température à l'intérieur du four de grillage (7),
un refroidisseur (8) recevant le produit final torréfié du four de torréfaction (13),
des moyens de transport livrant le produit fini refroidi pour une utilisation ultérieure à un magasin de produit fini (11), et
le four de torréfaction (7) est associé à des vannes de fermeture (21, 22) maintenant en permanence une pression supérieure à 1,0 bar(a) de 200 mbar(a) maximum à l'intérieur du four de torréfaction (7),
***caractérisé en ce que***
au moins l'un parmi un échangeur de chaleur (14) du flux de milieu de refroidissement réchauffé (f), un échangeur de chaleur (18) du flux de milieu de chauffage (e) du four de grillage (7) et un échangeur de chaleur d'un incinérateur (19) éliminant le milieu gazeux se développant lors de la pyrolyse est associé à un conduit de milieu délivrant un flux d'air séchant la charge vers l'appareil de séchage (3);
le moyen de transport comprend un magasin intermédiaire (5) et une unité de dosage sous vide (6) assurant un fonctionnement continu du moyen de transport délivrant la matière première séchée dans le four de grillage (7) pour le traitement thermique, l'unité de dosage sous vide (6) présente des vannes de fermeture commandables (6a, 6b) pour la fermeture étanche à l'air de l'intérieur de l'unité de dosage sous vide (6) vers le magasin intermédiaire (5) et pour la fermeture de l'intérieur de l'unité de dosage sous vide (6) vers le four de torréfaction (7) suivant aux températures utilisées dans le four de torréfaction (7), lesdites vannes de fermeture (6a, 6b) assurent périodiquement la fermeture étanche à l'air d'un intérieur de l'unité de dosage sous vide (6) reliée à une pompe à vide via un conduit de milieu.

3. Appareil selon la revendication 2, **caractérisé en ce qu'**une unité de broyage (1) coupant la charge de biomasse à traiter à la taille de traitement est insérée avant l'appareil de séchage (3).
